# EUROPÄISCHE PATENTSCHRIFT

(11) **EP 1 952 521 B1**
(45) Veröffentlichungstag und Bekanntmachung des Hinweises auf die Patenterteilung: **08.04.2015**
(21) Anmeldenummer: 06819206.1
(22) Anmeldetag: 31.10.2006
(51) Int. Cl.: H02M 5/293, H05B 39/04

(54) **DOPPEL-UNIVERSALDIMMER**
DOUBLE UNIVERSAL DIMMER
VARIATEUR UNIVERSEL DOUBLE

(30) Priorität: 26.11.2005 DE 202005018500 U
(43) Veröffentlichungstag der Anmeldung: 06.08.2008
(73) Patentinhaber: Merten GmbH, 51674 Wiehl (DE)
(72) Erfinder: SCHLECHTINGEN, Peter, 51597 Morsbach (DE)
(74) Vertreter: Von Kreisler Selting Werner - Partnerschaft von Patentanwälten und Rechtsanwälten mbB
(86) Internationale Anmeldenummer: PCT/EP2006/067992
(87) Internationale Veröffentlichungsnummer: WO 2007/060083

(56) Entgegenhaltungen:
- EP-A2- 1 313 205
- WO-A-00/40057
- DE-A1- 19 728 538

## Beschreibung

Die Erfindung betrifft einen Doppel-Universaldimmer zur Steuerung elektronischer Geräte mit mindestens zwei Universaldimmern in einer gemeinsamen Dose und mit einer Steuereinrichtung zur Erkennung des Lasttyps und zur Fehlersteuerung.

Ein Universaldimmer ist ein Dimmer mit Lastarterkennung, wie er beispielsweise in EP 1 313 205 B1 beschrieben ist. Lastarterkennung bedeutet, dass der Dimmer ermitteln kann, ob die durch den Dimmer gesteuerte Last eine induktive, kapazitive oder ohmsche Last ist. Zur Steuerung der Lasten arbeitet der Dimmer entweder mit einer Phasenanschnittssteuerung oder einer Phasenabschnittssteuerung. Ein Phasenanschnitt wird durch eine Verzögerung des Einschaltens der Last erreicht und endet beim Nulldurchgang der jeweiligen Wechselstromhalbwelle. Beim Phasenabschnitt erfolgt keine Zündverzögerung, jedoch eine Abschaltung vor dem Ende der Halbwelle. Die Impedanz der durch einen Dimmer gesteuerten Beleuchtungseinrichtungen kann neben ihrem ohmschen Anteil auch einen kapazitiven bzw. induktiven Anteil enthalten. Um hohe Abschaltspannungen zu vermeiden, müssen Lasten mit induktivem Verhalten im Phasenanschnitt betrieben werden und um hohe Einschaltströme zu vermeiden, müssen Lasten mit kapazitivem Verhalten im Phasenabschnitt betrieben werden. Um die Lastart zu ermitteln, führt die Steuereinheit zunächst einen Testlauf durch, bei dem der Lastschalter periodisch ein- und ausgeschaltet wird. Dadurch ergeben sich Teilperioden mit Wechselspannungen an einer Gleichrichterschaltung und Teilperioden mit Wechselstrom durch die Gleichrichterschaltung. Bei induktiver Last entsteht ein Nacheilen der Wechselstromkurve gegenüber einer Wechselstromkurve bei ohmscher Last. Dadurch wird der Stromnulldurchgang, der das erste Intervall beendet, verzögert, so dass das erste Intervall verkürzt wird. Das zweite Intervall beginnt dagegen regulär mit dem betreffenden Spannungsnulldurchgang, beispielsweise am Ende einer Halbperiode. Das Ende des zweiten Intervalls wird durch die induktive Last verzögert, so dass sich das zweite Intervall verlängert. Durch einen Vergleich der Längen des ersten und des zweiten Intervalls kann die Lastart festgelegt werden. Ist das zweite Intervall länger als das erste Intervall, handelt es sich um eine induktive Last. Ist dagegen das zweite Intervall kürzer als das erste Intervall, handelt es sich um eine kapazitive Last. Im Falle einer ohmschen Last haben beide Intervalle gleiche Längen.

Ein Doppel-Dimmer ist eine Kombination aus zwei Dimmern, die in einer gemeinsamen Dose, ähnlich wie Serienschalter, angeordnet sind. Aus DE 197 28 538 A1 ist ein Doppel-Universaldimmer bekannt. Der Dimmer ist gegen einen Serienschalter austauschbar und für den Einsatz in einer Unterputzdose bestimmt. Das Gerät enthält zwei Treiberendstufen als Dimmer und zu deren Steuerung einen gemeinsamen Mikrocontroller. Der Mikrocontroller dient zur Steuerung beider Dimmer.

Der Erfindung liegt die Aufgabe zugrunde, einen Doppel-Universaldimmer mit verbesserter Sicherungsfunktion zu schaffen.

Die Lösung dieser Aufgabe erfolgt erfindungsgemäß mit den Merkmalen des Anspruchs 1. Hiernach hat jeder Universaldimmer eine eigene Steuereinrichtung zur Erkennung des Lasttyps und zur Fehlersteuerung. Hierdurch kann eine Steuerung der Universaldimmer gleichzeitig erfolgen, d. h. die Universaldimmer können parallel betrieben werden. Beispielsweise kann ein Dimmer im Phasenanschnitt betrieben werden, während der andere Dimmer im Phasenabschnitt betrieben wird. Die Geschwindigkeit der Dimmersteuerung ist dadurch gegenüber einer sequentiellen Steuerung mit nur einer Steuereinrichtung erhöht. Insbesondere ist im Fehlerfall die Reaktionsgeschwindigkeit der Steuereinrichtung eines Dimmers erhöht. Im Fehlerfall, z. B. bei einem Lampenkurzschluss, dient die Steuereinrichtung als elektronische Sicherung zum Abschalten der Netzversorgungsspannung. Ein Lampenkurzschluss einer von dem Dimmer zu steuernden Lampe tritt innerhalb von Mikrosekunden auf. Die Steuereinrichtung des betreffenden Dimmers kann sofort reagieren und die Versorgungsspannung abschalten, weil sie nicht durch Arbeitsschritte für einen weiteren Dimmer abgelenkt ist. Die Reaktionsgeschwindigkeit zum Eingreifen der Steuereinrichtung in einem Fehlerfall ist somit erhöht. Die Sicherungsfunktion des Doppel-Universaldimmers ist verbessert.

Die Universaldimmer können auf einer ersten Platine angeordnet sein und die Steuereinrichtungen können auf einer zweiten, mit der ersten Platine verbindbaren Platine angeordnet sein. Elektrisch einander entsprechende Komponenten der Universaldimmer sind somit auf einer gemeinsamen Platine untergebracht. Eine Funktionstrennung der Einzelkomponenten erfolgt lediglich elektrisch aber nicht mechanisch. Die Herstellung des Doppel-Universaldimmers ist hierdurch vereinfacht.

Jeder der Universaldimmer kann eine Verstärkerendstufe, ein Netzteil, eine Bedienungseinrichtung und eine Nebenstelle enthalten, wobei mit der Bedienungseinrichtung auswechselbare Bedienelemente verbindbar sind.

Im folgenden wird anhand der Figuren ein Ausführungsbeispiel der Erfindung näher erläutert:

Es zeigen:
- Fig. 1: Ein schematisches Blockschaltbild der Doppel-Universaldimmerschaltung, und
- Fig. 2: das Blockschaltbild nach Fig. 1 mit Kenntlichmachung der räumlichen Anordnung der unterschiedlichen Komponenten.

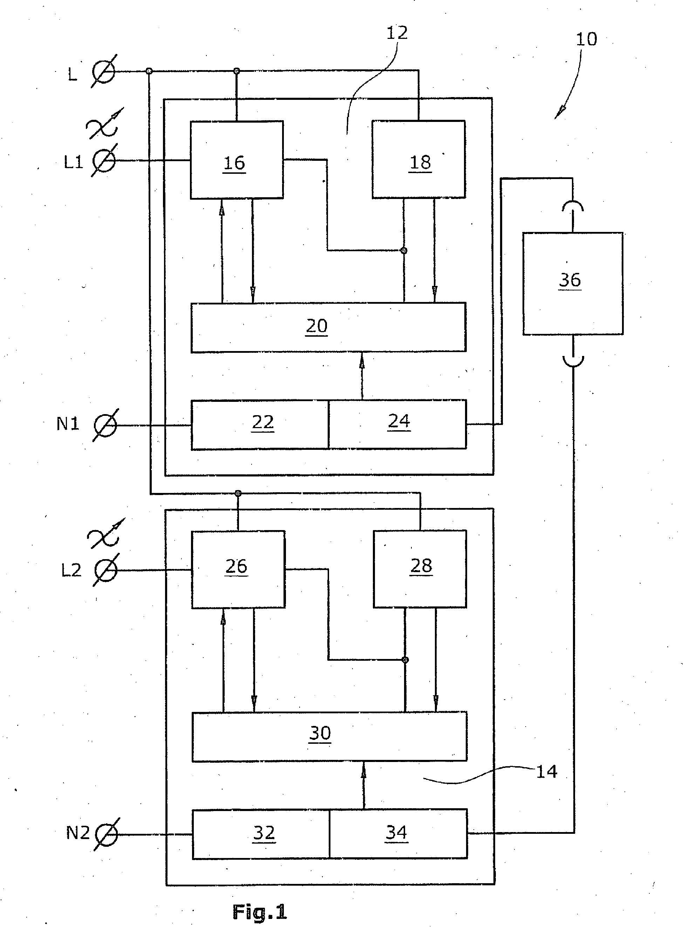

Fig. 1 zeigt den Doppel-Universaldimmer 10 in Blockschaltbilddarstellung. Der Doppel-Universaldimmer 10 enthält zwei Universaldimmer 12, 14. Der Universaldimmer 12 enthält eine Verstärkerendstufe 16, ein Netzteil 18, einen Mikrocontroller als Steuereinrichtung 20, eine Nebenstelle 22 und eine Bedienungseinrichtung 24, an die auswechselbaren Bedienelemente 36 angeschlossen sind. Die auswechselbaren Bedienelemente 36 können z. B. Taster, Sensoren oder Potentiometer sein, wobei jedem Universaldimmer 12, 14 ein eigenes Bedienelement 36 zugeordnet ist. Der zweite Universaldimmer 14 enthält eine Verstärkerendstufe 26, ein Netzteil 28, einen Mikrocontroller als Steuereinrichtung 30, eine Nebenstelle 32 und eine Bedienungseinrichtung 34, die ebenfalls mit den auswechselbaren Bedienelementen 36 verbunden ist.

Die Endstufen 16, 26 und die Steuereinrichtungen 20, 30 sind jeweils elektrisch mit dem betreffenden Netzteil 18, 28 verbunden. Die Endstufe 16 und das Netzteil 18 sowie die Endstufe 26 und das Netzteil 28 sind jeweils elektrisch mit einer Eingangsklemme L verbunden. Eine Anschlussklemme L1 ist als Ausgang der Endstufe 16 vorgesehen und eine Anschlussklemme L2 ist als Ausgang der Endstufe 26 vorgesehen. Die Nebenstellen 22 und 32 haben jeweils eine Anschlussklemme N1 bzw. N2 als Nebenstelleneingang. An die Nebenstelleneingänge N1, N2 können jeweils zusätzliche, externe Betätigungsorgane zur Betätigung der betreffenden Dimmer 12, 14 angeschlossen werden.

Die Bedienungseinrichtung 24, 34 liefert die Steuersignale des Bedienelements 36 über eine Signalleitung an die Steuereinrichtung 20, 30, die diese als Steuerbefehle über eine weitere Signalleitung an die entsprechende Endstufe 16, 26 weitergibt. Die Lastarterkennung erfolgt durch eine Phasenmessung, wobei die Endstufe 16, 26 die Phaseninformation der Last an der Klemme L1, L2 über eine Signalleitung an die Steuereinrichtung 20, 30 weiterleitet. Die Steuereinrichtung 20, 30 vergleicht diese Phaseninformation mit der Phaseninformation des Netzteils 18, 28, die die Steuereinrichtung 20, 30 über eine weitere Signalleitung von dem Netzteil 18, 28 erhält. In Abhängigkeit von der gemessenen Phase steuert die Steuereinrichtung 20, 30 die Last an der Klemme L1, L2 im Phasenanschnitt oder Phasenabschnitt. Eine kapazitive Last und eine ohmsche Last werden im Phasenabschnitt und eine induktive Last im Phasenanschnitt betrieben. Die Last an der Klemme L1 kann insbesondere im Phasenanschnitt betrieben werden, während die Last an der Klemme L2 im Phasenabschnitt betrieben wird. Die Laststeuerung kann somit parallel und unabhängig voneinander erfolgen. Insbesondere kann die Art der als Lasten betriebenen Leuchtmittel frei gewählt werden, wie z. B. eine Leuchtstoffröhre an der Klemme L1 und gleichzeitig eine Glühbirne an der Klemme L2.

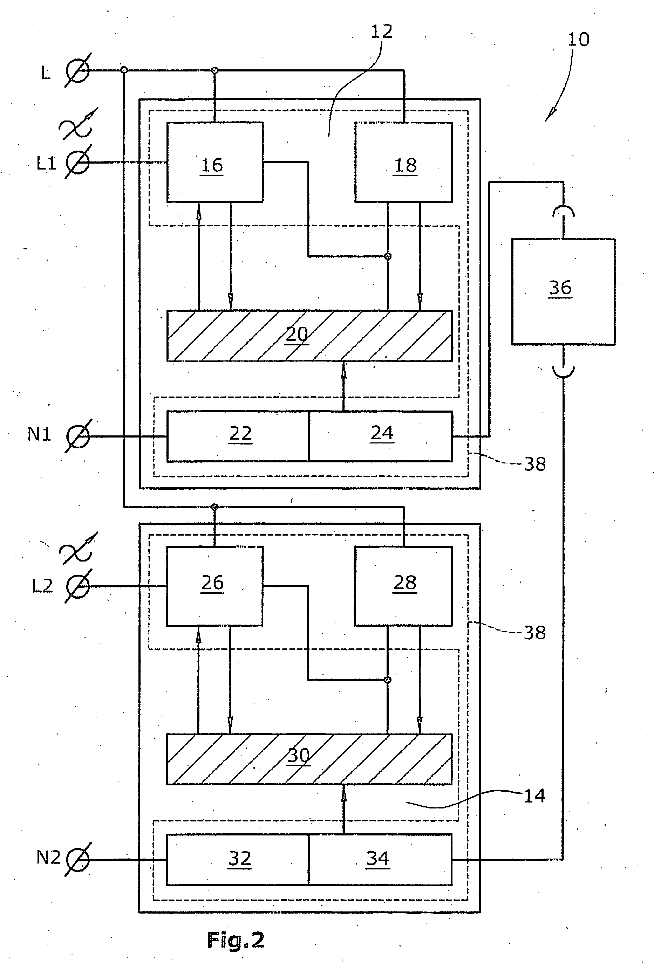

Die Schraffur der Steuereinrichtungen 20, 30 in Fig. 2 bedeutet, dass die Steuereinrichtungen 20, 30 auf einer gemeinsamen Platine angeordnet und befestigt sind, während die Endstufen 16, 26, die Netzteile 18, 28, die Nebenstellen 22, 32 und die Bedienungseinrichtungen 24, 34 beider Universaldimmer 12, 14 auf einer weiteren Platine, der Leistungsplatine 38, angeordnet und befestigt sind. Die Anordnung der Komponenten 16, 26, 18, 28, 22, 32, 24 und 34 auf der Leistungsplatine 38 ist in Fig. 2 durch die beiden gestrichelten Linien dargestellt. Es sind also diejenigen Bauteile der beiden Dimmer 12, 14 mit gleicher Funktion jeweils auf derselben Platine untergebracht. Die Platine mit den Steuereinrichtungen 20, 30 ist auf die Leistungsplatine 38 aufsteckbar. Beide Platinen mit den darauf befestigten Bauteilen sowie die Bedienelemente 36 sind in einer Dose, z. B. einer Unterputzdose, untergebracht. Die Platinen werden im montierten Zustand von den Bedienelementen 36 bedeckt.

## Patentansprüche

1. Doppel-Universaldimmer (10) zur Steuerung elektronischer Geräte mit mindestens zwei Universaldimmern (12,14) in einer gemeinsamen Dose und mit einer Steuereinrichtung (20,30) zur Erkennung des Lasttyps und zur Fehlersteuerung,
**dadurch gekennzeichnet**,
dass jeder Universaldimmer (12,14) eine eigene Steuereinrichtung (20,30) zur Erkennung des Lasttyps und zur Fehlersteuerung hat.

2. Doppel-Universaldimmer (10) nach Anspruch 1, **dadurch gekennzeichnet, dass** die Universaldimmer (12,14) auf einer ersten Platine (38) angeordnet sind und dass die Steuereinrichtungen (20,30) auf einer zweiten, mit der ersten Platine (38) verbindbaren Platine angeordnet sind.

3. Doppel-Universaldimmer (10) nach Anspruch 1 oder 2, **dadurch gekennzeichnet, dass** jeder Universaldimmer (12,14) eine Verstärkerendstufe (16,26), ein Netzteil (18,28), eine Bedienungseinrichtung (24,34) und eine Nebenstellen (22,32) enthält, wobei mit der Bedienungseinrichtung (24,34) auswechselbare Bedienelemente (36) verbindbar sind.

## Claims

1. Dual universal dimmer (10) for controlling electronic devices, comprising at least two universal dimmers (12,14) in a common box, and comprising a control device (20,30) for detection of the load type and for error control,
**characterized in**
that each universal dimmer (12,14) has its own control device (20,30) for detection of the load type and for error control.

2. Dual universal dimmer (10) according to claim 1, **characterized in that** the universal dimmers (12,14) are arranged on a first board (38) and that the control devices (20,30) are arranged on a second board which is connectable to the first board (38).

3. Dual universal dimmer (10) according to claim 1 or 2, **characterized in that** each universal dimmer (12,14) comprises an amplifier output stage (16,26), a power supply (18,28), an operating device (24,34) and an extension (22,32), the operating device (24,34) being adapted to have exchangeable operating elements (36) connected to it.

## Revendications

1. Variateur universel double (10) pour la commande d'appareils électroniques, comprenant au moins deux variateurs universels (12, 14) dans un boîtier commun, et un dispositif de commande (20, 30) destiné à la détection du type de charge et à la gestion d'erreurs,
**caractérisé en ce que**
chaque variateur universel (12, 14) comprend un dispositif de commande (20, 30) propre pour la détection du type de charge et pour la gestion d'erreurs.

2. Variateur universel double (10) selon la revendication 1, **caractérisé en ce que** les variateurs universels (12, 14) sont disposés sur une première platine (38) et **en ce que** les dispositifs de commande (20, 30) sont disposés sur une seconde platine pouvant être reliée à la première platine (38).

3. Variateur universel double (10) selon la revendication 1 ou 2, **caractérisé en ce que** chaque variateur universel (12, 14) comprend un étage final d'amplificateur (16, 26), un bloc d'alimentation (18, 28), un dispositif de commande (24, 34) et un poste secondaire (22, 32), des organes de commande (36) interchangeables pouvant être reliés au dispositif de commande (24, 34).
